# EUROPÄISCHE PATENTSCHRIFT

(11) **EP 4 288 886 B1**
(45) Veröffentlichungstag und Bekanntmachung des Hinweises auf die Patenterteilung: **30.04.2025**
(21) Anmeldenummer: 22713397.2
(22) Anmeldetag: 07.03.2022
(51) Int. Cl.: G06F 21/60, G06F 21/57, G06F 21/53, G06F 21/71, H04L 9/32, G06F 21/62, G06F 21/74, H04L 9/08

(54) **BEREITSTELLUNG VON ZU SCHÜTZENDEN DATEN IN EINER SICHEREN AUSFÜHRUNGSUMGEBUNG EINES DATENVERARBEITUNGSSYSTEMS**
PROVISION OF DATA TO BE PROTECTED IN A SECURE EXECUTION ENVIRONMENT OF A DATA PROCESSING SYSTEM
FOURNITURE DES DONNÉES À PROTÉGER DANS UN ENVIRONNEMENT D'EXÉCUTION SÉCURISÉ D'UN SYSTÈME DE TRAITEMENT DES DONNÉES

(30) Priorität: 24.03.2021 EP 21164668
(43) Veröffentlichungstag der Anmeldung: 13.12.2023
(73) Patentinhaber: Siemens Aktiengesellschaft, 80333 München (DE)
(72) Erfinder: ZWANZGER, Johannes, 85579 Neubiberg (DE)
(74) Vertreter: Siemens Patent Attorneys
(86) Internationale Anmeldenummer: PCT/EP2022/055737
(87) Internationale Veröffentlichungsnummer: WO 2022/200027

(56) Entgegenhaltungen:
- US-A1- 2020 287 901
- US-A1- 2021 064 765
- JOHANNES GÖTZFRIED: "Trusted Systems in Untrusted Environments: Protecting against Strong Attackers", 7 December 2017 (2017-12-07), XP055543828, Retrieved from the Internet <URL:https://opus4.kobv.de/opus4-fau/files/9115/JohannesGoetzfriedDissertation.pdf> [retrieved on 20190117]

## Beschreibung

### HINTERGRUND DER ERFINDUNG

### Gebiet der Erfindung

Die Erfindung gibt ein Verfahren zur Bereitstellung von zu schützenden Daten in einer sicheren Ausführungsumgebung eines Datenverarbeitungssystems an. Außerdem gibt die Erfindung ein Datenverarbeitungssystems, ein Computerprogrammprodukt und ein computerlesbares Medium an.

### Beschreibung des Stands der Technik

Beim Ausliefern von Code und/oder Daten auf "Fremdgeräte" ergibt sich für den Ersteller des Codes bzw. der Daten oft ein Dilemma: Einerseits müssen der Code bzw. die Daten dort vorliegen und so funktionieren, wie es ihrer Intention entspricht, um den angestrebten Anwendungsfall zu bedienen. Anderseits können darin sensitive Informationen (beispielsweise Firmen-Know-how) enthalten sein, die man vor dem Anwender bzw. einem Plattformbetreiber, insbesondere einem Cloudanbieter, lieber geheim halten möchte.

Bei dem "Fremdgerät" kann es sich prinzipiell um jede Art einer informationsverarbeitenden Anlage handeln, die der Ersteller oder Inhaber des Codes bzw. Daten nicht vollständig unter Kontrolle hat und bei der die Möglichkeit des Missbrauchs des Codes bzw. der Daten, insbesondere durch Analyse/Reverse Engineering, Modifikation, Klonen, etc., besteht; insbesondere also ein Server in der Cloud, aber auch der private PC eines Anwenders.

Es greift in diesem Fall zu kurz, den verwendeten Code bzw. die Daten einfach zu verschlüsseln und bei Bedarf mit nach üblichen Programmierstandards erstellter Software wieder zu entschlüsseln, da dann offensichtlich alle Informationen, insbesondere die Schlüssel, die zum Entschlüsseln des Codes bzw. der Daten notwendig sind, in dieser Software und damit auf dem Fremdgerät verfügbar sein müssen. In diesem Falle würde die Software und ggf. auch die von ihr ausgegebene entschlüsselte Form des Codes bzw. der Daten zum Ziel eines Angriffes.

Einer der Hauptansätze, um Software bzw. die damit behandelten Daten zu schützen, ist Obfuskation, d.h. die Transformation von Code und Daten in eine äquivalente, aber schwerer verständliche Form. Einige auf dem Markt erhältliche, automatisch ablaufende Tools erlauben es zwar, diesen Transformationsschritt mit vergleichsweise wenig Aufwand durchzuführen; dafür findet die Obfuskation naturgemäß nur auf einem sehr generellen Level - insbesondere durch 1:1-Übersetzung der Maschinencode-Instruktionen in die entsprechenden Instruktionen für eine virtuelle Maschine mit eigenem Befehlssatz - statt, was das erreichbare Schutzniveau begrenzt. Anspruchsvollere Obfuskationstechniken setzen üblicherweise auf der algorithmischen Ebene an und verändern dort auch logisch die Programmschritte. Dies setzt allerdings oft sehr aufwändige, algorithmen-individuelle Arbeitsschritte voraus. Allgemein führt Obfuskation auf einem höheren Level (d.h. "gute" Obfuskation mit hohem Schutzniveau) meist zu einem deutlich erhöhten Ressourcenaufwand hinsichtlich Speicher und Laufzeit der Software.

Die Aufgabe der Erfindung besteht darin, eine allgemein einsetzbare Lösung mit hohem Schutzniveau und kleinem Ressourcenbedarf bereitzustellen, um sensitiven Code bzw. Daten auf einem Fremdgerät ausführbar bzw. auswertbar zu machen, ohne den Code bzw. die Daten selbst offenzulegen. US2020287901 offenbart eine Out-of-Band Authentisierung, die einen sicheren Kommunikationskanal zu einer sicheren Ausführungsumgebung (TEE) benutzt. Die TEE stellt einen öffentlichen Schlüssel zur Bereitstellung gesicherter Daten durch externe Teilnehmer zur Verfügung.

XP055543828 offenbart die Zusammenarbeit einer unsicheren Ausführungsumgebung mit einer TEE unter Verwendung von Attestierung und Obfuszierung.

US2021064765 offenbart den Schutz von Programmcode auf externen Systemen durch eine TEE unter Verwendung von Attestierung und Obfuszierung.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zur Bereitstellung von zu schützenden Daten in einer sicheren Ausführungsumgebung eines Datenverarbeitungssystems.

Das Verfahren weist die folgenden Schritte auf:
- Ausführen eines Enklavencodes in der sicheren Ausführungsumgebung,
- Generieren eines Schlüsselpaars durch den Enklavencode, wobei das Schlüsselpaar einen öffentlichen Schlüssel und einen privaten Schlüssel aufweist,
- Senden des öffentlichen Schlüssels an eine unsichere Ausführungsumgebung des Datenverarbeitungssystems, wobei die unsichere Ausführungsumgebung außerhalb der sicheren Ausführungsumgebung liegt,
- Senden des öffentlichen Schlüssels und Senden von ersten verschlüsselten Daten an einen obfuszierten Programmcode, wobei der obfuszierte Programmcode von der unsicheren Ausführungsumgebung aufgewiesen wird,
- Verifizieren des öffentlichen Schlüssels durch den obfuszierten Programmcode und in Abhängigkeit von Ergebnissen des Verifizierens ein Umschlüsseln der ersten verschlüsselten Daten in zweite verschlüsselte Daten, wobei die zweiten verschlüsselten Daten mit dem öffentlichen Schlüssel verschlüsselt sind,
- Senden der zweiten verschlüsselten Daten an den Enklavencode in der sicheren Ausführungsumgebung und
- Entschlüsseln der zweiten verschlüsselten Daten unter Einsatz des privaten Schlüssels in die zu schützenden Daten durch den Enklavencode in der sicheren Ausführungsumgebung.

Anschließend kann eine Verarbeitung der zu schützenden Daten in der sicheren Ausführungsumgebung durch den Enklavencode durchgeführt werden.

Ein Aspekt der Erfindung besteht darin, zu schützende Daten direkt auf einem Fremdgerät zu entschlüsseln, dort aber nur für Enklavencode in einer sicheren Ausführungsumgebung verfügbar zu machen, während ein Umschlüsseln der zu schützenden Daten in einer unsicheren Ausführungsumgebung stattfindet.

In einer weiteren Weiterbildung der Erfindung ist eine Zugriffsbeschränkung auf die sichere Ausführungsumgebung vorhanden, welche der unsicheren Ausführungsumgebung den Zugriff auf die sichere Ausführungsumgebung verweigert. Das hat den Vorteil, dass ein Angreifer keinen Zugriff auf die sichere Ausführungsumgebung und die dort vorhandenen Daten hat.

Somit wird erfindungsgemäß für den Schutz der zu schützenden Daten, insbesondere eines zu schützenden Codes, vorausgesetzt, dass auf dem Datenverarbeitungssystem, insbesondere einem Fremdgerät, eine sichere Ausführungsumgebung, eine sog. Trusted Execution Environment (TEE), vorhanden ist, die sich von einer unsicheren (d.h. vom Anwender/Plattformbetreiber kontrollierten) Ausführungsumgebung auf dem Datenverarbeitungssystem durch folgende Eigenschaften abhebt.

Durch die sichere Ausführungsumgebung kann Enklavencode, insbesondere in einer Enklave, ausgeführt werden, dessen Speicherinhalt von einer anderen Enklave oder der unsicheren Ausführungsumgebung aus nicht zugreifbar ist (weder durch andere laufende Applikationen noch durch das Betriebssystem des Datenverarbeitungssystems).

Außerdem bietet die sichere Ausführungsumgebung dem innerhalb der Enklave laufenden Enklavencode die Möglichkeit, für bestimmte Daten, insbesondere kryptographische Schlüssel, nach außen, d.h. an die unsichere Ausführungsumgebung bzw. außerhalb des Datenverarbeitungssystems zu attestieren, dass diese durch den unveränderten Enklavencode innerhalb der Enklave in der sicheren Ausführungsumgebung erzeugt wurden. Die Attestierung kann außerhalb durch Code, insbesondere den obfuszierten Programmcode, überprüft werden, welcher ohne konkrete Kenntnis des Datenverarbeitungssystems entwickelt werden kann. Der obfuszierte Programmcode kann zur Laufzeit ggf. aber Informationen über das Datenverarbeitungssystem als Input erhalten.

Es wird somit obfuszierter Programmcode zur Ausführung in der unsicheren Ausführungsumgebung eines Datenverarbeitungssystems, insbesondere Fremdgerätes, mit folgenden Eigenschaften implementiert.

Der obfuszierte Programmcode kann die Attestierung von einem durch den Enklavencode generierten öffentlichen Schlüssel, durch die im vorherigen Absatz genannten Eigenschaften, verifizieren. Es findet somit ein Verifizieren des öffentlichen Schlüssels durch den obfuszierten Programmcode statt, ob die Attestierung in sicherer Ausführungsumgebung (von vertrauenswürdiger Enklave) erstellt wurde.

Sofern die Attestierung erfolgreich war, schlüsselt obfuszierter Programmcode erste verschlüsselte Daten, insbesondere vorverschlüsselte Daten, um in zweite verschlüsselte Daten.

In einer vorteilhaften Ausführung der Erfindung geschieht dies mit einer symmetrischen Entschlüsselungsfunktion Dec_sym unter einem symmetrischen Schlüssel K_sym zusammen mit einer asymmetrischen Verschlüsselung Enc_asym vermöge D'=Enc_asym(Dec_sym(D'', K_sym), K_pub), mit D' = zweite verschlüsselte Daten, und D'' = erste verschlüsselte Daten. Beachte: Dec_sym(D'', K_sym)=D.

Enc_asym ist dabei in einer vorteilhaften Ausführung der Erfindung ein hybrides Verschlüsselungsverfahren, bei dem ein zum Verschlüsselungszeitpunkt zufällig erzeugter, symmetrischer Schlüssel mit K_pub verschlüsselt wird, welcher wiederum, insbesondere aus Performance- und Ressourcengründen, für die Verschlüsselung der Payload der zu schützenden Daten verwendet wird.

Aufgrund der durch den obfuszierten Programmcode angewandten Obfuskation sind die oben genannten Teilfunktionen, insbesondere die Verifikation der Attestierung, die symmetrische Entschlüsselung von den ersten verschlüsselten Daten in die zu schützenden Daten, und die hybride Verschlüsselung von den zu schützenden Daten in die zweiten verschlüsselten Daten im obfuszierten Programmcode für einen Angreifer weder analysierbar noch voneinander zu trennen. Insbesondere ist es einem Angreifer nicht möglich, aus obfuszierten Zwischenergebnissen der Teilfunktionen auf deren logisches Pendant, insbesondere auf entschlüsselte Anteile der zu schützenden Daten, zu schließen.

Ebenso wenig kann er die Verifikation der Attestierung des öffentlichen Schlüssels in dem obfuszierten Programmcode so manipulieren, dass ein nicht oder inkorrekt attestierter öffentlicher Schlüssel zur Generierung der Ausgabe der zweiten verschlüsselten Daten verwendet werden kann. Dies muss verhindert werden, denn andernfalls könnte ein Angreifer mit dem privaten Gegenstück des nicht attestierten öffentlichen Schlüssels die zweiten verschlüsselten Daten entschlüsseln.

Die genannten Schritte zur Erstellung des obfuszierten Programmcodes müssen nur einmalig pro Schlüssel K_sym erfolgen und können ohne Kenntnis des Datenverarbeitungssystems, insbesondere der Fremdgeräte, auf denen der obfuszierte Programmcode später zum Einsatz kommt, durchgeführt werden.

Insbesondere kann derselbe obfuszierte Programmcode auf verschiedenen Fremdgeräten zum Einsatz kommen. Für die Attestierung muss dazu nur ein geringfügiger Teil des obfuszierten Programmcodes auf den Enklavencode angepasst werden, insbesondere in Form einer Konstante, die einem Hash des Enklavencodes entspricht und im Rahmen der Attestierungs-Verifikation genutzt werden kann, um die Integrität (d.h. "Unverändertheit") des Enklaven-Codes festzustellen.

Die zu schützenden Daten werden, bevor sie auf das Datenverarbeitungssystem gebracht werden, vorverschlüsselt in die ersten verschlüsselten Daten. In einer vorteilhaften Ausführung der Erfindung geschieht dies mit der symmetrischen Verschlüsselungsfunktion. Dieser Schritt muss bei gleichbleibendem symmetrischem Schlüssel K_sym nur einmalig pro Datensatz der zu schützenden Daten ausgeführt werden. Dieser Schritt kann außerdem ohne Kenntnis der Fremdgeräte, auf denen der obfuszierte Programmcode später zum Einsatz kommt, durchgeführt werden. Insbesondere kann derselbe obfuszierte Programmcode auf verschiedenen Fremdgeräten zum Einsatz kommen.

Für jedes Fremdgerät werden der obfuszierte Programmcode und die ersten verschlüsselten Daten in die unsichere Ausführungsumgebung übertragen, entweder online oder "offline", z.B. per Installationsdatenträger, welcher auch die weitere Software enthalten kann, die die von dem Enklavencode auf Basis der zu schützenden Daten errechneten Ergebnisse nutzen soll.

In einer Variante der Erfindung kann ein Senden der zweiten verschlüsselten Daten von dem obfuszierten Programmcode an die unsichere Ausführungsumgebung vor dem Senden der zweiten verschlüsselten Daten an die Enklave in der sicheren Ausführungsumgebung stattfinden.

In einer Weiterbildung der Erfindung ist das Datenverarbeitungssystem ausgebildet als:
- Server,
- Cloudserver,
- Fremdsystem,
- Computer und/oder
- mobiles informationsverarbeitendes Gerät.

In einer weiteren Weiterbildung der Erfindung ist die sichere Ausführungsumgebung als Trusted Execution Environment (TEE) ausgebildet.

In einer weiteren Weiterbildung der Erfindung ist der Enklavencode ausgebildet Zufallszahlen zu erzeugen, wobei mindestens eine der Zufallszahlen zur Generierung des asymmetrischen Schlüsselpaares herangezogen wird. Die Zufallszahlen können als echte Zufallszahlen oder als Pseudozufallszahlen ausgebildet sein, wobei die Pseudozufallszahlenerzeugung auf einem Geheimnis (Seed) basieren muss, das nur innerhalb der Enklave bekannt ist. Die Zufallszahlen sind auch bei Kenntnis des Enklavencodes nicht vorhersagbar.

In einer weiteren Weiterbildung der Erfindung sind die zweiten verschlüsselten Daten mittels eines hybriden Verschlüsselungsverfahren verschlüsselt. Sofern die Attestierung erfolgreich war, schlüsselt obfuszierter Programmcode erste verschlüsselte Daten, insbesondere vorverschlüsselte Daten, um in zweite verschlüsselte Daten.

In einer vorteilhaften Ausführung der Erfindung geschieht dies mit einer symmetrischen Entschlüsselungsfunktion Dec_sym unter einem symmetrischen Schlüssel K_sym zusammen mit einer asymmetrischen Verschlüsselung Enc_asym vermöge D'=Enc_asym(Dec_sym(D'', K_sym), K_pub), mit D' = zweite verschlüsselte Daten, und D'' = erste verschlüsselte Daten. Beachte: Dec_sym(D'', K_sym)=D und D''=Enc_sym(D, K_Sym) mit der zu Dec_sym inversend symmetrischen Verschlüsselungsfunktion Enc_sym.

Enc_asym ist dabei in einer vorteilhaften Ausführung der Erfindung ein hybrides Verschlüsselungsverfahren, bei dem ein zum Verschlüsselungszeitpunkt zufällig erzeugter, symmetrischer Schlüssel mit K_pub verschlüsselt wird, welcher wiederum, insbesondere aus Performance- und Ressourcengründen, für die Verschlüsselung der Payload der zu schützenden Daten verwendet wird. In einer Variante dieser Ausführung wird der symmetrische Schlüssel für das hybride Verschlüsselungsverfahren nicht zufällig erzeugt, sondern in einem durch den obfuszierten Code geheim gehaltenen Verfahren deterministisch abgeleitet. Hierdurch kann die Erfindung auch genutzt werden, wenn in der unsicheren Ausführungsumgebung ein wirklich zufälliges (nicht-deterministisches) Erzeugen eines Schlüssels nicht möglich ist. In das Ableitungsverfahren können dabei die ersten verschlüsselten Daten D'' oder die entschlüsselten Daten D eingehen. Dadurch wird garantiert, dass für unterschiedliche Daten D'' bzw. D jeweils ein unterschiedlicher symmetrischer Schlüssel für das hybride Verschlüsselungsverfahren zum Einsatz kommt.

In einer weiteren Weiterbildung der Erfindung sind die ersten verschlüsselten Daten auf dem Datenverarbeitungssystem in der unsicheren Arbeitsumgebung gespeichert. Die ersten verschlüsselten Daten können somit einmalig und vorab auf dem Datenverarbeitungssystem abgelegt werden.

In einer weiteren Weiterbildung der Erfindung kommen anstelle der symmetrischen Ver- und Entschlüsselungsfunktionen enc_sym und dec_sym (ggf. von enc_asym und dec_asym verschiedene) asymmetrische Ver- und Entschlüsselungsfunktionen zum Einsatz. Allerdings dürfte die Komplexität asymmetrischer Verfahren im obfuszierten Programmcode zu einem erhöhten Ressourcenbedarf bei Speicher und Laufzeit führen.

In einer weiteren Weiterbildung der Erfindung werden bei dem Umschlüsseln der ersten verschlüsselten Daten zu zweiten verschlüsselten Daten obfuszierte Zwischenergebnisse erstellt. Aufgrund der durch den obfuszierten Programmcode angewandten Obfuskation sind die oben genannten Teilfunktionen, insbesondere die Verifikation der Attestierung, die symmetrische Entschlüsselung von den ersten verschlüsselten Daten in die zu schützenden Daten, und die hybride Verschlüsselung von den zu schützenden Daten in die zweiten verschlüsselten Daten im obfuszierten Programmcode für einen Angreifer weder analysierbar noch voneinander zu trennen. Insbesondere ist es einem Angreifer nicht möglich, aus obfuszierten Zwischenergebnissen der Teilfunktionen auf deren logisches Pendant, insbesondere auf entschlüsselte Anteile der zu schützenden Daten, zu schließen.

In einer weiteren Weiterbildung der Erfindung wird bei dem Verifizieren des öffentlichen Schlüssels durch den obfuszierten Programmcode geprüft, ob eine gültige Attestierung des öffentlichen Schlüssels vorliegt, wobei das Umschlüsseln der ersten verschlüsselten Daten in die zweiten verschlüsselten Daten nur bei Vorliegen einer gültigen Attestierung durchgeführt wird. Der obfuszierte Programmcode kann die Attestierung von einem durch den Enklavencode generierten öffentlichen Schlüssel, durch die im vorherigen Absatz genannten Eigenschaften, verifizieren. Es findet somit ein Verifizieren des öffentlichen Schlüssels durch den obfuszierten Programmcode statt, ob die Attestierung in sicherer Ausführungsumgebung (von vertrauenswürdiger Enklave) erstellt wurde.

Sofern die Attestierung erfolgreich war, schlüsselt obfuszierter Programmcode erste verschlüsselte Daten, insbesondere vorverschlüsselte Daten, um in zweite verschlüsselte Daten.

In einer weiteren Weiterbildung der Erfindung ist der obfuszierte Code auf dem Datenverarbeitungssystem in der unsicheren Arbeitsumgebung gespeichert. Der obfuszierte Code wird somit genau wie die ersten verschlüsselten Daten einmalig und vorab auf dem Datenverarbeitungssystem abgelegt.

In einer weiteren Weiterbildung der Erfindung sind die zu schützenden Daten als:
- Programmcode,
- interpretierbarer Code,
- Parametrisierungen für Algorithmen,
- numerische Daten und/oder
- Gewichte eines neuronalen Netzes,
ausgebildet.

Die Unterscheidung, ob es sich bei den zu schützenden Daten um Code oder Daten handelt, kann fließend betrachtet werden. Die Erfindung ist z.B. auch anwendbar, falls die sichere Ausführungsumgebung, insbesondere TEE, nicht die Ausführung von extern eingebrachtem nativem Code, also solchem, der nicht Teil des feststehenden Enklavencodes ist, unterstützt. In diesem Fall kann es sich bei den zu schützenden Daten um interpretierbaren Code, auch als Daten bezeichenbar, handeln, der innerhalb der Enklave von einem im Enklavencode enthaltenen Interpreter umgesetzt wird. Ferner können mehrere verschiedene zu schützende Datensätze D1, D2, usw. gleichzeitig mit demselben obfuszierten Programmcode genutzt werden.

In einem weiteren Anwendungsbeispiel kann es sich bei den zu schützenden Daten um Parametrierungen von Algorithmen handeln, die für deren effiziente Ausführung notwendig sind, insbesondere bei Condition-Monitoring-Systemen und für Predictive Maintenance.

In einem weiteren Anwendungsbeispiel können die zu schützenden Daten ausführbaren bzw. interpretierbaren Code umfassen, der betriebsinternes Knowhow, insbesondere Betriebsgeheimnisse, umfasst, welches durch die Ausführung oder die Interpretation in der sicheren Ausführungsumgebung, insbesondere eine Trusted Execution Environment, geschützt wird.

In einer weiteren Weiterbildung der Erfindung wird das Ausführen des Enklavencodes, wie zuvor erwähnt, in einer Enklave durchgeführt, wobei die Enklave von der sicheren Ausführungsumgebung aufgewiesen wird.

Die Erfindung umfasst außerdem ein Datenverarbeitungssystem zur Ausführung eines erfindungsgemäßen Verfahrens. Das Datenverarbeitungssystem weist die folgenden Komponenten auf:
- eine sichere Ausführungsumgebung, wobei die sichere Ausführungsumgebung ausgebildet ist:
   - einen Enklavencode auszuführen wodurch ein Schlüsselpaar generiert wird, wobei das Schlüsselpaar einen öffentlichen Schlüssel und einen privaten Schlüssel aufweist,

   - den öffentlichen Schlüssel zu senden,
- eine unsichere Arbeitsumgebung, wobei die unsichere Ausführungsumgebung außerhalb der sicheren Ausführungsumgebung liegt, wobei die unsichere Arbeitsumgebung ausgebildet ist, den öffentlichen Schlüssel zu empfangen,
- einen obfuszierten Programmcode, wobei sich der obfuszierte Programmcode innerhalb der unsicheren Ausführungsumgebung befindet,

wobei die unsichere Ausführungsumgebung ausgebildet ist, den öffentlichen Schlüssel und erste verschlüsselten Daten an den obfuszierten Programmcode zu senden,
wobei der obfuszierte Programmcode ausgebildet ist, ein Verifizieren des öffentlichen Schlüssels durchzuführen und in Abhängigkeit von Ergebnissen des Verifizierens ein Umschlüsseln der ersten verschlüsselten Daten in zweite verschlüsselte Daten durchzuführen, wobei die zweiten verschlüsselten Daten mit dem öffentlichen Schlüssel verschlüsselt sind, wobei der obfuszierte Programmcode außerdem ausgebildet ist, die zweiten verschlüsselten Daten zu senden, und
wobei die sichere Ausführungsumgebung ausgebildet ist die zweiten verschlüsselten Daten zu empfangen und die zweiten verschlüsselten Daten durch den Enklavencode zu entschlüsseln.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Es sei angemerkt, dass es auf den ersten Blick möglich scheinen könnte, dass der obfuszierte Programmcode statt in der unsicheren Ausführungsumgebung auch direkt als Teil des Enklavencodes in der sicheren Ausführungsumgebung, insbesondere in einer Enklave laufen könnte und nach erfolgreicher Prüfung, dass der Enklavencode, welcher in diesem Fall dann den obfuszierten Programmcode enthalten würde, unverändert in der Enklave läuft, die ersten verschlüsselten Daten in die zu schützenden Daten entschlüsseln (die Notwendigkeit der Umschlüsselung in die zweiten verschlüsselten Daten entfiele). Das Problem besteht darin, dass mit dem obfuszierten Programmcode als Teil des Enklavencodes ein Reflexivitätsproblem entsteht: Sobald man in den obfuszierten Programmcode einkodiert, wie der unveränderte Enklavencode aussehen muss, insbesondere basierend auf einem Hash über den Enklavencode, der im Rahmen der Attestierung bestätigt wird, ändert sich auch der Enklavencode mit. Unabhängig von diesem prinzipiellen Problem kann es - je nach Gegebenheiten der sicheren Ausführungsumgebung - auch grundsätzlich sinnvoll sein, den obfuszierten Programmcode außerhalb der sicheren Ausführungsumgebung laufen zu lassen, insbesondere aufgrund dort vorliegender Ressourcenengpässe oder Einschränkungen an die Form des obfuszierten Programmcodes.

Die Erfindung bietet den Vorteil, dass beliebige Inhalte, insbesondere zu schützende Daten, welche auch als Code ausgebildet sein können, vorverschlüsselt auf Fremdgeräte verteilt und dort durch obfuszierten Code sicher für die Nutzung innerhalb einer sicheren Ausführungsumgebung, insbesondere einer TEE, umgeschlüsselt werden. Dabei muss das Datenverarbeitungssystem, insbesondere müssen die Fremdgeräte, nicht vorab bekannt sein.

Die Erfindung bietet den weiteren Vorteil, dass sowohl die Umschlüsselung als auch die Entscheidung, ob eine solche überhaupt erfolgen darf, in obfusziertem Code lokal auf dem Datenverarbeitungssystem, insbesondere dem Fremdgerät, passiert. Folglich ist keine Verbindung zu einer vertrauenswürdigen Remotesite notwendig, was für den Anwender Vorteile hinsichtlich der Verfügbarkeit und für den Verteiler/Ersteller der Inhalte Vorteile in der Handhabung bietet.

Die Erfindung bietet den weiteren Vorteil, dass die obfuszierte Umschlüsselung so gestaltet werden kann, dass sie für beliebige Enklaven umschlüsselt, die ein geeignetes Zertifikat vorweisen können, d.h. die Obfuskation muss dann auch für verschiedene Fremdgeräte nur einmalig vorgenommen werden.

Die Erfindung bietet den weiteren Vorteil, dass der obfuszierte Code auf beliebige vorschlüsselte Daten angewendet werden kann, d.h. auch bei mehreren (z.B. zeitlich versetzt) verteilten Inhalten muss die Obfuskation nur einmal vorgenommen werden.

Die Erfindung bietet den weiteren Vorteil, dass verglichen mit der Obfuskation des anwendungsspezifischen, in der Enklave laufenden Codes bzw. der dort verarbeiteten Daten viel individueller Aufwand entfällt, da das erfindungsgemäße Verfahren generisch anwendbar ist.

Die Erfindung bietet den weiteren Vorteil, dass es sich um eine reine Softwarelösung handelt, d.h. es ist kein zusätzliches Hardware-Dongle notwendig.

Die genannten Vorteile der Erfindung werden dadurch erreichet, dass die gemeinsame Obfuskation der Verifikation der Attestierung des öffentlichen Schlüssels und die Umschlüsselung der ersten verschlüsselten Daten in die zweiten verschlüsselten Daten in einem untrennbaren Block, dem obfuszierten Programmcode, es erlaubt, dass dieser Block auch in nicht vertrauenswürdigen unsicheren Umgebungen ausgeführt werden kann. Ein Angreifer kann, gute Obfuskationstechnik vorausgesetzt, die beiden Einzeloperationen nicht voneinander trennen und den obfuszierten Programmcode auch nicht so manipulieren, dass er gefälschte, d.h. nicht korrekt attestierte asymmetrische öffentliche Schlüssel akzeptieren würde. Somit kann sichergestellt werden, dass die sicherheitskritische Umschlüsselung der ersten verschlüsselten Daten in die zweiten verschlüsselten Daten nur für öffentliche Schlüssel erfolgt, die ausschließlich in der Enklave der sicheren Ausführungsumgebung bekannt sind.

Dadurch, dass der öffentliche Schlüssel innerhalb der sicheren Ausführungsumgebung eines Datenverarbeitungssystems, insbesondere eines individuellen Fremdgerätes, generiert wurde, die Attestierung aber mit vom konkreten Datenverarbeitungssystems unabhängigen obfuszierten Programmcode verifiziert werden kann, kann derselbe obfuszierte Programmcode für verschiedene Fremdgeräte genutzt werden. Die Umschlüsselung der ersten verschlüsselten Daten in die zweiten verschlüsselten Daten durch den obfuszierten Programmcode hängt dabei nicht von den konkreten zu schützenden Daten oder den ersten verschlüsselten Daten ab, so dass der obfuszierte Programmcode auch für verschiedene zu schützende Daten wiederverwendet werden kann.

Außerdem hängt der obfuszierte Programmcode nicht vom anwendungsspezifischen Teil des in der Enklave laufenden Enklaven-codes ab und kann daher generisch über viele Anwendungen hinweg genutzt werden.

Zusätzlich ermöglicht das erfindungsgemäße Verfahren einen im Vergleich zu einer individuellen Obfuskation vergleichsweise kostengünstigen Ansatz zum Schutz von Firmen-Know-How in zu schützenden Daten, insbesondere Code, die auf vorab unbekannten Fremdgeräten vorliegen bzw. ausgeführt werden müssen.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens und
- Fig. 2: den Ablauf eines erfindungsgemäßen Verfahrens in einem erfindungsgemäßen Datenverarbeitungssystem.

### DETAILLIERTE BESCHREIBUNG DER ERFINDUNG

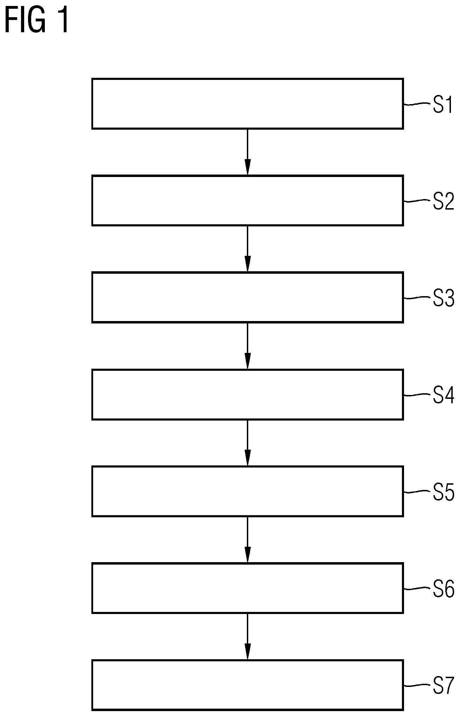

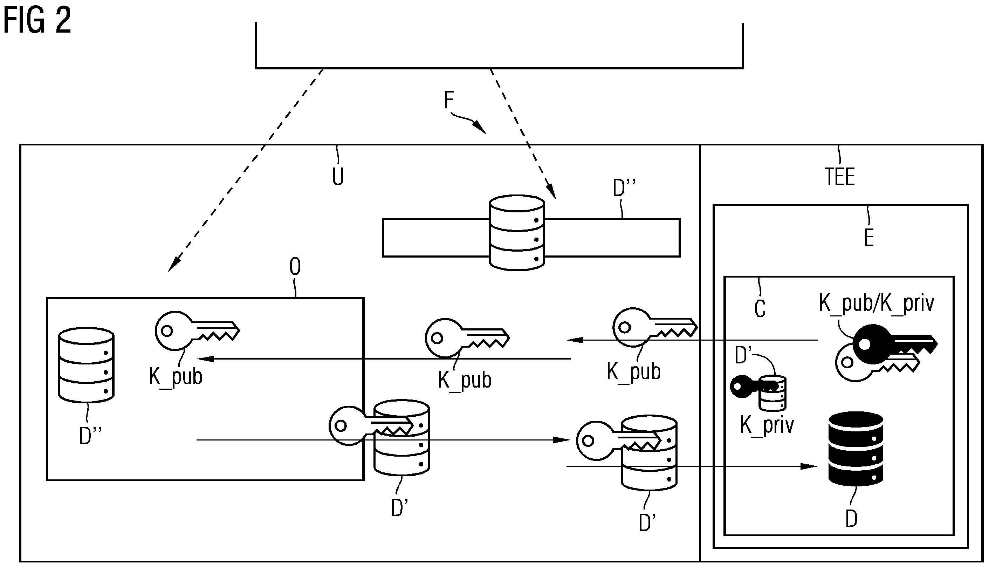

Fig. 1 zeigt ein Ablaufdiagramm des erfindungsgemäßen Verfahrens zur Bereitstellung von zu schützenden Daten D in einer sicheren Ausführungsumgebung TEE eines Datenverarbeitungssystems F und Fig. 2 zeigt den Ablauf eines erfindungsgemäßen Verfahrens anhand eines erfindungsgemäßen Datenverarbeitungssystem.

Nach Fig. weist das Verfahren die folgenden Schritte auf. Die Komponenten sind jeweils in Fig. 2 dargestellt.
- Schritt S1: Ausführen eines Enklavencodes C in der sicheren Ausführungsumgebung TEE,
- Schritt S2: Generieren S2 eines Schlüsselpaars K_pub/K_priv durch den Enklavencode C, wobei das Schlüsselpaar K_pub/K_priv einen öffentlichen Schlüssel K_pub und einen privaten Schlüssel K_priv aufweist,
- Schritt S3: Senden des öffentlichen Schlüssels K_pub an eine unsichere Ausführungsumgebung U des Datenverarbeitungssystems F, wobei die unsichere Ausführungsumgebung U außerhalb der sicheren Ausführungsumgebung TEE liegt,
- Schritt S4: Senden des öffentlichen Schlüssels K_pub und Senden von ersten verschlüsselten Daten D'' an einen obfuszierten Programmcode O, wobei der obfuszierte Programmcode O von der unsicheren Ausführungsumgebung U aufgewiesen wird,
- Schritt S5: Verifizieren des öffentlichen Schlüssels P_pub durch den obfuszierten Programmcode O und in Abhängigkeit von Ergebnissen des Verifizierens ein Umschlüsseln der ersten verschlüsselten Daten D'' in zweite verschlüsselte Daten D', wobei die zweiten verschlüsselten Daten D' mit dem öffentlichen Schlüssel K_pub verschlüsselt sind,
- Schritt S6: Senden der zweiten verschlüsselten Daten D' an die Einklave E in der sicheren Ausführungsumgebung TEE und
- Schritt S7: Entschlüsseln der zweiten verschlüsselten Daten D' in die zu schützenden Daten D.

Das Datenverarbeitungssystem F zur Ausführung eines Verfahrens nach Fig. 1 weist die folgenden Komponenten auf:
- eine sichere Ausführungsumgebung TEE, wobei die sichere Ausführungsumgebung TEE ausgebildet ist:
   - einen Enklavencode C auszuführen wodurch ein Schlüsselpaar K_pub/K_priv generiert wird, wobei das Schlüsselpaar K_pub/K_priv einen öffentlichen Schlüssel K_pub und einen privaten Schlüssel K_priv aufweist,
   - den öffentlichen Schlüssel K_pub zu senden,
- eine unsichere Arbeitsumgebung U, wobei die unsichere Ausführungsumgebung U außerhalb der sicheren Ausführungsumgebung TEE liegt, wobei die unsichere Arbeitsumgebung U ausgebildet ist, den öffentlichen Schlüssel K_pub zu empfangen,
- einen obfuszierten Programmcode O, wobei sich der obfuszierte Programmcode O innerhalb der unsicheren Ausführungsumgebung U befindet,

wobei die unsichere Ausführungsumgebung U ausgebildet ist, den öffentlichen Schlüssel K_pub und erste verschlüsselten Daten D'' an den obfuszierten Programmcode O zu senden,
wobei der obfuszierte Programmcode O ausgebildet ist, ein Verifizieren des öffentlichen Schlüssels K_pub durchzuführen und in Abhängigkeit von Ergebnissen des Verifizierens ein Umschlüsseln der ersten verschlüsselten Daten D'' in zweite verschlüsselte Daten D' durchzuführen, wobei die zweiten verschlüsselten Daten D' mit dem öffentlichen Schlüssel K_pub verschlüsselt sind, wobei der obfuszierte Programmcode O außerdem ausgebildet ist, die zweiten verschlüsselten Daten D' zu senden, und
wobei die sichere Ausführungsumgebung TEE ausgebildet ist durch die Enklave E die zweiten verschlüsselten Daten D' zu empfangen und die zweiten verschlüsselten Daten D' zu entschlüsseln.

Das Ausführen des Enklavencodes C wird in einer Enklave E durchgeführt, wobei die Enklave E von der sicheren Ausführungsumgebung TEE aufgewiesen wird

Im Folgenden ist ein konkretes Ausführungsbeispiel der Erfindung beschrieben. Eine wichtige Teilfunktion in einer Software, die vom Hersteller öffentlich zum Kauf angeboten wird, wird durch ein neuronales Netz berechnet. In den vom Netz gelernten Gewichten steckt zu schützendes Knowhow des Herstellers, daher sollen diese nicht bekannt werden. Aber natürlich soll die Software auf den Geräten der Käufer korrekt ablaufen, daher muss dort das neuronale Netz zusammen mit dem Input für die Funktion in irgendeiner Form ausgewertet werden können.

Bislang macht Software keinerlei Gebrauch von einer Trusted Execution Environment bzw. sicheren Ausführungsumgebeung TEE, der gesamte Code läuft also in einer unsicheren Ausführungsumgebung U. Somit ist es für einen Angreifer bzw. potenziellen Wettbewerber kein Problem, die Software für die Ausführung auf einem eigenen Gerät zu erwerben und dort deren Ablauf, inklusive der Auswertung des neuronalen Netzes, zu analysieren. Dieses Problem kann mit dem Verfahren aus der Erfindung gelöst werden, sofern auf den Geräten der Käufer eine TEE gemäß der mit der Erfindung beschriebenen Voraussetzungen vorhanden ist.

Die Gewichte des neuronalen Netzes entsprechen den zu schützenden Daten D. Sie werden im Rahmen des Softwareentwicklungsprozesses mit einem symmetrischen Schlüssel in die ersten verschlüsselten Daten D'' vorverschlüsselt und obfuszierter Programmcode O erstellt. Beides, die ersten verschlüsselten Daten D'' und der obfuszierte Programmcode O, werden auf dem Datenverarbeitungssystem F gespeichert.

Der Enklavencode C wird so implementiert, dass er nach der Entschlüsselung der zweiten verschlüsselten Daten D' in die zu schützenden Daten D (d.h. der Gewichte des neuronalen Netzes) die Auswertung des neuronalen Netzes für beliebige aus der unsicheren Ausführungsumgebung U empfangene Inputs durchführen und das Ergebnis wieder an die unsichere Ausführungsumgebung U in die sicher Ausführungsumgebung TEE zurückliefern kann.

Der Teil der Software, der bislang die Auswertung des neuronalen Netzes für einen bestimmten Input vorgenommen hat, wird ersetzt durch einen, der den Input an den Enklavencode C weiterleitet und das Ergebnis von dort wieder entgegennimmt.

Die gesamte Software, inklusive des obfuszierten Progranmmcodes O, des Enklavencodes C und der ersten verschlüsselten Daten D'', kann wie bisher in einem Zug an die Kunden ausgeliefert werden, z.B. per Installationsdatenträger oder Download.

Die Gewichte D des neuronalen Netzes liegen in der unsicheren Ausführungsumgebung U in der verschlüsselten Form D'' vor, während die entschlüsselten Gewichte nur innerhalb des Enklavencodes C vorliegen, welche dort aber für niemanden - auch nicht den Anwender - zugreifbar sind.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zur Bereitstellung von zu schützenden Daten (D) in einer sicheren Ausführungsumgebung (TEE) eines Datenverarbeitungssystems (F),
mit den Schritten:
- Ausführen (S1) eines Enklavencodes (C) in der sicheren Ausführungsumgebung (TEE),
- Generieren (S2) eines Schlüsselpaars (K_pub/K_priv) durch den Enklavencode (C), wobei das Schlüsselpaar (K_pub/K_priv) einen öffentlichen Schlüssel (K_pub) und einen privaten Schlüssel (K_priv) aufweist,
- Senden (S3) des öffentlichen Schlüssels (K_pub) an eine unsichere Ausführungsumgebung (U) des Datenverarbeitungssystems (F), wobei die unsichere Ausführungsumgebung (U) außerhalb der sicheren Ausführungsumgebung (TEE) liegt,
- Senden (S4) des öffentlichen Schlüssels (K_pub) und Senden von ersten verschlüsselten Daten (D'') an einen obfuszierten Programmcode (O), wobei der obfuszierte Programmcode (O) von der unsicheren Ausführungsumgebung (U) aufgewiesen wird,
- Verifizieren (S5) des öffentlichen Schlüssels (P_pub) durch den obfuszierten Programmcode (O) und in Abhängigkeit von Ergebnissen des Verifizierens ein Umschlüsseln der ersten verschlüsselten Daten (D") in zweite verschlüsselte Daten (D'), wobei die zweiten verschlüsselten Daten (D') mit dem öffentlichen Schlüssel (K_pub) verschlüsselt sind,
wobei bei dem Verifizieren des öffentlichen Schlüssels (K_pub) durch den obfuszierten Programmcode (O) geprüft wird, ob eine gültige Attestierung des öffentlichen Schlüssels (K_pub) vorliegt und wobei das Umschlüsseln der ersten verschlüsselten Daten (D") in die zweiten verschlüsselten Daten (D') nur bei Vorliegen einer gültigen Attestierung durchgeführt wird,
- Senden (S6) der zweiten verschlüsselten Daten (D') an die Enklave (E) in der sicheren Ausführungsumgebung (TEE),
- Entschlüsseln (S7) der zweiten verschlüsselten Daten (D') in die zu schützenden Daten (D) und
- Ausführung oder Interpretation der zu schützenden Daten in der sicheren Ausführungsumgebung.

2. Verfahren nach Anspruch 1,
wobei das Datenverarbeitungssystem (F) ausgebildet ist als:
- Server,
- Cloudserver,
- Fremdsystem,
- Computer und/oder
- mobiles informationsverarbeitendes Gerät.

3. Verfahren nach einem der vorhergehenden Ansprüche, wobei eine Zugriffsbeschränkung auf die sichere Ausführungsumgebung (TEE) vorhanden ist, welche der unsicheren Ausführungsumgebung (U) den Zugriff auf die sichere Ausführungsumgebung (TEE) verweigert.

4. Verfahren nach einem der vorhergehenden Ansprüche, wobei der Enklavencode (C) ausgebildet ist Zufallszahlen zu erzeugen, wobei mindestens eine der Zufallszahlen zur Generierung des Schlüsselpaares (K_pub/K_priv) herangezogen wird.

5. Verfahren nach einem der vorhergehenden Ansprüche, wobei die zweiten verschlüsselten Daten (D') mittels eines rein asymmetrischen oder hybriden Verschlüsselungsverfahren verschlüsselt sind.

6. Verfahren nach einem der vorhergehenden Ansprüche, wobei die ersten verschlüsselten Daten (D'') auf dem Datenverarbeitungssystem (F) in der unsicheren Arbeitsumgebung (U) gespeichert sind.

7. Verfahren nach einem der vorhergehenden Ansprüche, wobei das Schlüsselpaar (K_pub/K_priv) als asymmetrisches Schlüsselpaar ausgebildet ist.

8. Verfahren nach einem der vorhergehenden Ansprüche, wobei bei dem Umschlüsseln der ersten verschlüsselten Daten (D") zu zweiten verschlüsselten Daten (D') obfuszierte Zwischenergebnisse erstellt werden.

9. Verfahren nach einem der vorhergehenden Ansprüche,
wobei der obfuszierte Code (O) auf dem Datenverarbeitungssystem (F) in der unsicheren Arbeitsumgebung gespeichert ist.

10. Verfahren nach einem der vorhergehenden Ansprüche,
wobei die zu schützenden Daten (D) als:
- Programmcode,
- interpretierbarer Code,
- Parametrisierungen für Algorithmen,
- numerische Daten und/oder
- Gewichte eines neuronalen Netzes,
ausgebildet sind.

11. Verfahren nach einem der vorhergehenden Ansprüche,
wobei das Ausführen des Enklavencodes (C) in einer Enklave (E) durchgeführt wird, wobei die Enklave (E) von der sicheren Ausführungsumgebung (TEE) aufgewiesen wird.

12. Datenverarbeitungssystem (F) zur Ausführung eines Verfahrens nach einem der vorherigen Ansprüche, das Datenverarbeitungssystem (F) aufweisend:
- eine sichere Ausführungsumgebung (TEE), wobei die sichere Ausführungsumgebung (TEE) ausgebildet ist: - einen Enklavencode (C) auszuführen wodurch ein Schlüsselpaar (K_pub/K_priv) generiert wird, wobei das Schlüsselpaar (K_pub/K_priv) einen öffentlichen Schlüssel (K_pub) und einen privaten Schlüssel (K_priv) aufweist,
- den öffentlichen Schlüssel (K_pub) zu senden,
- eine unsichere Arbeitsumgebung (U), wobei die unsichere Ausführungsumgebung (U) außerhalb der sicheren Ausführungsumgebung (TEE) liegt, wobei die unsichere Arbeitsumgebung (U) ausgebildet ist, den öffentlichen Schlüssel (K_pub) zu empfangen,
- einen obfuszierten Programmcode (O), wobei sich der obfuszierte Programmcode (O) innerhalb der unsicheren Ausführungsumgebung (U) befindet,
wobei die unsichere Ausführungsumgebung (U) ausgebildet ist, den öffentlichen Schlüssel (K_pub) und erste verschlüsselten Daten (D") an den obfuszierten Programmcode (O) zu senden,
wobei der obfuszierte Programmcode (O) ausgebildet ist, ein Verifizieren des öffentlichen Schlüssels (K_pub) durchzuführen und in Abhängigkeit von Ergebnissen des Verifizierens ein Umschlüsseln der ersten verschlüsselten Daten (D") in zweite verschlüsselte Daten (D') durchzuführen, wobei die zweiten verschlüsselten Daten (D') mit dem öffentlichen Schlüssel (K_pub) verschlüsselt sind,
wobei bei dem Verifizieren des öffentlichen Schlüssels (K_pub) durch den obfuszierten Programmcode (O) geprüft wird, ob eine gültige Attestierung des öffentlichen Schlüssels (K_pub) vorliegt und wobei das Umschlüsseln der ersten verschlüsselten Daten (D") in die zweiten verschlüsselten Daten (D') nur bei Vorliegen einer gültigen Attestierung durchgeführt wird,
wobei der obfuszierte Programmcode (O) außerdem ausgebildet ist, die zweiten verschlüsselten Daten (D') zu senden, und wobei die sichere Ausführungsumgebung (TEE) ausgebildet ist die zweiten verschlüsselten Daten (D') zu empfangen und die zweiten verschlüsselten Daten (D') zu entschlüsseln und auszuführen oder zu interpretieren.

13. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 11 ausgeführt werden, wenn das Computerprogramm auf der Recheneinheit ausgeführt wird.

14. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 11 ausgeführt werden, wenn das Computerprogramm auf der Recheneinheit ausgeführt wird.

## Claims

1. Method for providing data (D) to be protected in a secure execution environment (TEE) of a data processing system (F), comprising the steps:
- executing (S1) an enclave code (C) in the secure execution environment (TEE),
- generating (S2) a key pair (K_pub/K_priv) by means of the enclave code (C), wherein the key pair (K_pub/K_priv) comprises a public key (K_pub) and a private key (K_priv),
- sending (S3) the public key (K_pub) to an insecure execution environment (U) of the data processing system (F), wherein the insecure execution environment (U) is outside the secure execution environment (TEE),
- sending (S4) the public key (K_pub) and sending first encrypted data (D'') to an obfuscated program code (0), wherein the obfuscated program code (0) is part of the insecure execution environment (U),
- verifying (S5) the public key (P_pub) by means of the obfuscated program code (0) and, depending on results of the verification, converting the first encrypted data (D'') into second encrypted data (D'), wherein the second encrypted data (D') are encrypted with the public key (K_pub),
wherein, when the public key (K_pub) is verified by the obfuscated program code (0), a check is made to determine whether a valid attestation of the public key (K_pub) is present, and wherein the conversion of the first encrypted data (D'') into the second encrypted data (D') is carried out only if a valid attestation is present,
- sending (S6) the second encrypted data (D') to the enclave (E) in the secure execution environment (TEE),
- decrypting (S7) the second encrypted data (D') into the data (D) to be protected, and
- executing or interpreting the data to be protected in the secure execution environment.

2. Method according to Claim 1,
wherein the data processing system (F) is configured as a:
- server,
- cloud server,
- third-party system,
- computer and/or
- mobile information processing device.

3. Method according to one of the preceding claims,
wherein there is restricted access to the secure execution environment (TEE) that denies the insecure execution environment (U) access to the secure execution environment (TEE).

4. Method according to one of the preceding claims,
wherein the enclave code (C) is configured to generate random numbers, wherein at least one of the random numbers is used to generate the key pair (K_pub/K_priv).

5. Method according to one of the preceding claims,
wherein the second encrypted data (D') are encrypted using a purely asymmetric or hybrid encryption method.

6. Method according to one of the preceding claims,
wherein the first encrypted data (D'') are stored on the data processing system (F) in the insecure working environment (U).

7. Method according to one of the preceding claims,
wherein the key pair (K_pub/K_priv) is configured as an asymmetric key pair.

8. Method according to one of the preceding claims,
wherein during the conversion of the first encrypted data (D'') to produce second encrypted data (D') obfuscated intermediate results are created.

9. Method according to one of the preceding claims,
wherein the obfuscated code (0) is stored on the data processing system (F) in the insecure working environment.

10. Method according to one of the preceding claims,
wherein the data (D) to be protected are configured as:
- program code,
- interpretable code,
- parametrizations for algorithms,
- numerical data and/or
- weights of a neural network.

11. Method according to one of the preceding claims,
wherein the execution of the enclave code (C) is performed in an enclave (E), wherein the enclave (E) is part of the secure execution environment (TEE).

12. Data processing system (F) for carrying out a method according to one of the preceding claims, the data processing system (F) comprising:
- a secure execution environment (TEE), wherein the secure execution environment (TEE) is configured to: - execute an enclave code (C), thereby generating a key pair (K pub/K priv), wherein the key pair (K_pub/K_priv) comprises a public key (K_pub) and a private key (K_priv),
- send the public key (K_pub),
- an insecure working environment (U), wherein the insecure execution environment (U) is outside the secure execution environment (TEE), wherein the insecure working environment (U) is configured to receive the public key (K_pub),
- an obfuscated program code (0), wherein the obfuscated program code (0) is within the insecure execution environment (U),
wherein the insecure execution environment (U) is configured to send the public key (K_pub) and first encrypted data (D'') to the obfuscated program code (0), wherein the obfuscated program code (0) is configured to perform a verification of the public key (K_pub) and, depending on results of the verification, to perform a conversion of the first encrypted data (D'') into second encrypted data (D'), wherein the second encrypted data (D') are encrypted with the public key (K_pub), wherein, when the public key (K_pub) is verified by the obfuscated program code (0), a check is made to determine whether a valid attestation of the public key (K_pub) is present, and wherein the conversion of the first encrypted data (D'') into the second encrypted data (D') is carried out only if a valid attestation is present,
wherein the obfuscated program code (0) is further configured to send the second encrypted data (D'), and wherein the secure execution environment (TEE) is configured to receive the second encrypted data (D') and to decrypt and execute or interpret the second encrypted data (D').

13. Computer program product comprising a computer program, wherein the computer program can be loaded into a storage device of a computing unit, wherein the computer program is used to perform the steps of a method according to one of Claims 1 to 11 when the computer program is executed on the computing unit.

14. Computer-readable medium on which a computer program is stored, wherein the computer program can be loaded into a storage device of a computing unit, wherein the computer program is used to perform the steps of a method according to one of Claims 1 to 11 when the computer program is executed on the computing unit.

## Revendications

1. Procédé destiné à la mise à disposition de données à protéger (D) dans un environnement d'exécution sécurisé (TEE) d'un système de traitement de données (F),
avec les étapes suivantes :
- réalisation (S1) d'un code d'enclave (C) dans l'environnement d'exécution sécurisé (TEE),
- génération (S2) d'une paire de clés (K_pub/K_priv) par le biais du code d'enclave (C), dans lequel la paire de clés (K_pub/K_priv) présente une clé publique (K_pub) et une clé privée (K_priv),
- envoi (S3) de la clé publique (K_pub) à un environnement d'exécution non sécurisé (U) du système de traitement de données (F), dans lequel l'environnement d'exécution non sécurisé (U) se situe à l'extérieur de l'environnement d'exécution sécurisé (TEE),
- envoi (S4) de la clé publique (K_pub) et envoi de premières données cryptées (D'') à un code de programme obscurci (O), dans lequel le code de programme obscurci (O) est présenté par l'environnement d'exécution non sécurisé (U),
- vérification (S5) de la clé publique (K_pub) par le biais du code de programme obscurci (O) et en fonction de résultats de la vérification un nouveau cryptage des premières données cryptées (D'') en deuxièmes données cryptées (D'), dans lequel les deuxièmes données cryptées (D') sont cryptées avec la clé publique (K_pub), dans lequel lors de la vérification de la clé publique (K_pub) par le biais du code de programme obscurci (O) il est vérifié si une attestation valable de la clé publique (K_pub) est présente et dans lequel le nouveau cryptage des premières données cryptées (D'') en deuxièmes données cryptées (D') n'est effectué qu'en présence d'une attestation valable,
- envoi (S6) des deuxièmes données cryptées (D') à l'enclave (E) dans l'environnement d'exécution sécurisé (TEE),
- décryptage (S7) des deuxièmes données cryptées (D') en données à protéger (D) et
- réalisation ou interprétation des données à protéger dans l'environnement d'exécution sécurisé.

2. Procédé selon la revendication 1,
dans lequel le système de traitement de données (F) est configuré en tant que :
- serveur,
- serveur en nuage,
- système externe,
- ordinateur et/ou
- appareil de traitement d'informations mobile.

3. Procédé selon l'une quelconque des revendications précédentes,
dans lequel une limitation d'accès à l'environnement d'exécution sécurisé (TEE) est présente, laquelle refuse l'accès à l'environnement d'exécution sécurisé (TEE) à l'environnement d'exécution non sécurisé (U).

4. Procédé selon l'une quelconque des revendications précédentes,
dans lequel le code d'enclave (C) est configuré pour générer des nombres aléatoires, dans lequel au moins un des nombres aléatoires est invoqué pour la génération de la paire de clés (K_pub/K_priv).

5. Procédé selon l'une quelconque des revendications précédentes,
dans lequel les deuxièmes clés décryptées (D') sont cryptées au moyen d'un procédé de cryptage purement asymétrique ou hybride.

6. Procédé selon l'une quelconque des revendications précédentes,
dans lequel les premières données cryptées (D'') sur le système de traitement des données (F) sont enregistrées dans l'environnement de travail non sécurisé (U).

7. Procédé selon l'une quelconque des revendications précédentes,
dans lequel la paire de clés (K_pub/K_priv) est configurée en tant que paire de clés asymétriques.

8. Procédé selon l'une quelconque des revendications précédentes,
dans lequel lors du nouveau cryptage des premières données cryptées (D'') en deuxièmes données cryptées (D') des résultats intermédiaires obscurcis sont produits.

9. Procédé selon l'une quelconque des revendications précédentes,
dans lequel le code obscurci (O) sur le système de traitement des données (F) est enregistré dans l'environnement de travail non sécurisé.

10. Procédé selon l'une quelconque des revendications précédentes,
dans lequel les données à protéger (D) sont configurées en tant que :
- code de programme,
- code apte à être interprété,
- paramétrages pour des algorithmes,
- données numériques et/ou
- poids d'un réseau neuronal.

11. Procédé selon l'une quelconque des revendications précédentes,
dans lequel la réalisation du code d'enclave (C) est effectué dans une enclave (E), dans lequel l'enclave (E) est présentée par l'environnement d'exécution sécurisé (TEE).

12. Système de traitement de données (F) destiné à la réalisation d'un procédé selon l'une quelconque des revendications précédentes, le système de traitement de données (F) présentant :
- un environnement d'exécution sécurisé (TEE), dans lequel l'environnement d'exécution sécurisé (TEE) est configuré :
- pour réaliser un code d'enclave (C), moyennant quoi une paire de clés (K_pub/K_priv) est générée, dans lequel la paire de clés (K_pub/K_priv) présente une clé publique (K_pub) et une clé privée (K_priv),
- pour envoyer la clé publique (K_pub),
- un environnement de travail non sécurisé (U), dans lequel l'environnement d'exécution non sécurisé (U) se situe à l'extérieur de l'environnement d'exécution sécurisé (TEE), dans lequel l'environnement de travail non sécurisé (U) est configuré pour recevoir la clé publique (K_pub),
- un code de programme obscurci (O), dans lequel le code de programme obscurci (O) se trouve au sein de l'environnement d'exécution non sécurisé (U),
dans lequel l'environnement d'exécution non sécurisé (U) est configuré pour envoyer la clé publique (K_pub) et des premières données cryptées (D'') au code de programme obscurci (O),
dans lequel le code de programme obscurci (O) est configuré pour effectuer une vérification de la clé publique (K_pub) et effectuer un nouveau cryptage des premières données cryptées (D'') en deuxièmes données cryptées (D'), dans lequel les deuxièmes données cryptées (D') sont cryptées avec la clé publique (K_pub), dans lequel lors de la vérification de la clé publique (K_pub) par le biais du code de programme obscurci (O) il est vérifié si une attestation valable de la clé publique (K_pub) est présente et dans lequel le nouveau cryptage des premières données cryptées (D'') en deuxièmes données cryptées (D') est effectué uniquement en présence d'une attestation valable,
dans lequel le code de programme obscurci (O) est en outre configuré pour envoyer les deuxièmes données cryptées (D') et dans lequel l'environnement d'exécution sécurisé (TEE) est configuré pour recevoir les deuxièmes données cryptées (D') et décrypter et réaliser ou interpréter les deuxièmes données cryptées (D').

13. Produit de programme informatique, comprenant un programme informatique, dans lequel le programme informatique peut être chargé dans un dispositif de mémoire d'une unité de calcul, dans lequel les étapes d'un procédé selon l'une quelconque des revendications 1 à 11 sont réalisées avec le programme informatique lorsque le programme informatique est réalisé sur l'unité de calcul.

14. Support lisible par ordinateur, sur lequel un programme informatique est enregistré, dans lequel le programme informatique peut être chargé dans un équipement d'enregistrement d'une unité de calcul, dans lequel les étapes d'un procédé selon l'une quelconque des revendications 1 à 11 sont réalisées avec le programme informatique lorsque le programme informatique est réalisé sur l'unité de calcul.
